Europäisches Patentamt

European Patent Office

Office européen des brevets

(19)

(11) Veröffentlichungsnummer: **0 060 343**
**B1**

(12) **EUROPÄISCHE PATENTSCHRIFT**

(45) Veröffentlichungstag der Patentschrift:
31.07.85

(51) Int. Cl.⁴: **H 02 M 3/335**

(21) Anmeldenummer: 81110192.2

(22) Anmeldetag: 05.12.81

(54) Spannungswandler.

(30) Priorität: 13.03.81 DE 3109612

(43) Veröffentlichungstag der Anmeldung:
22.09.82 Patentblatt 82/38

(45) Bekanntmachung des Hinweises auf die Patenterteilung:
31.07.85 Patentblatt 85/31

(84) Benannte Vertragsstaaten:
DE FR GB IT SE

(56) Entgegenhaltungen:
DE - A - 2 429 566
US - A - 3 569 818
US - A - 3 611 105
US - A - 3 953 779
US - A - 4 013 935
US - A - 4 071 884

(73) Patentinhaber: **ROBERT BOSCH GMBH, Postfach 50,
D-7000 Stuttgart 1 (DE)**

(72) Erfinder: **Kühn, Willi, Dipl.-Ing, Gartenstrasse 32,
D-7145 Markgröningen (DE)**
Erfinder: **Mausner, Eberhard, Dipl.-Ing,
Stresemannstrasse 58, D-7140 Ludwigsburg (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Die Erfindung geht aus von einem Spannungswandler mit einem Wandlertransformator und einem Spannungsregler nach der Gattung des Hauptanspruchs. Es ist schon ein solcher Spannungswandler aus der US-A-3 611 105 sowie aus der Zeitschrift »Markt und Technik«, Nr. 37, September 1980, Seite 68 bekannt. Beim Einsatz dieser bekannten Spannungswandler zur Versorgung von elektronischen Sicherheitseinrichtungen sowie medizinischen und militärischen Elektronikgeräten, bei denen ein Ausfall der Spannungsversorgung besonders schwerwiegende Folgen hätte, haben zwar absinkende Eingangsspannungen bis zu sehr niedrigen Werten sowie Störspannungen nur einen geringen Einfluß auf die Spannungsversorgung des zu versorgenden elektronischen Geräts, jedoch sind oft zusätzliche Sicherheitsmaßnahmen notwendig und sollten einfach und kostengünstig realisierbar sein.

Der Erfindung liegt daher die Aufgabe zugrunde, die Endstufe sowohl gegen einen ausgangsseitigen Kurzschluß, wie auch gegen Überlastung beim Einschalten zu schützen. Der erfindungsgemäße Spannungswandler mit den kennzeichnenden Merkmalen des Hauptanspruchs löst diese Aufgabe und hat den Vorteil, daß durch die Hinzufügung eines Komparators gleichzeitig zwei verschiedene Schutzmaßnahmen erreicht werden. Die vorgesehene Einschaltzeitverzögerung sorgt dafür, daß z. B. beim Einschalten des zu versorgenden elektronischen Geräts zunächst ein relativ langsamer Spannungsaufbau erfolgt. Dies ist insbesondere dann der Fall, wenn Kondensatoren als Energiereserve einer Sicherheitseinrichtung zunächst aufgeladen werden müssen. Würde der Wandler sofort den dafür notwendigen Strom liefern müssen, so wäre die Endstufe überlastet, bzw. sie müßte aufwendiger dimensioniert werden, und eine Kapazitätskontrolle der Kondensatoren der Energiereserve durch die Sicherheitseinrichtung wäre nicht möglich.

Durch die in den Unteransprüchen aufgeführten Maßnahmen sind vorteilhafte Weiterbildungen und Verbesserungen des im Hauptanspruch angegebenen Spannungswandlers möglich. Besonders vorteilhaft ist die Begrenzung der Ausgangsspannung des als »open collector« IC ausgebildeten Spannungsreglers durch einen ausgangsseitig angeschlossenen Spannungsteiler, dessen Abgriff sowohl mit dem Ausgang des Spannungsreglers, wie auch über einen Speicherkondensator mit Masse verbunden ist.

Auf diese Weise kann die maximale Impulsdauer für die primärseitige Ansteuerung des Wandlertransformators begrenzt werden, wodurch der entsprechende Steuertransistor gegen Überlastung geschützt wird, was einen weiteren Beitrag zur Sicherheit des Gesamtsystems darstellt.

Weiterhin ist es besonders günstig, durch kurze Impulse des Dreiecksgenerators auf den die Regelspannung führenden Eingang des Komparators einen ständigen Minimalbetrieb des Spannungswandlers auch bei überhöhter Eingangsspannung zu gewährleisten. Dadurch kann auch für diesen Fall eine Funktionskontrolle des Spannungswandlers jederzeit durchgeführt werden.

Um die Regelelektronik auch bei stark absinkender Spannungsversorgung noch ausreichend versorgen zu können, ist es besonders günstig, dieser über Dioden sowohl die Versorgungsspannung des Spannungswandlers, wie auch die gleichgerichtete Ausgangsspannung des Wandlertransformators zuzuführen.

Weiterhin ist es besonders günstig, die Ausgangssignalfolge des ersten Komparators dem Wandlertransformator über eine dreistufige Transistoranordnung zuzuführen, die aus einem npn-, einen pnp- einen npn-Transistor besteht, wobei der Emitter des pnp-Transistors direkt an die Versorgungsspannung angeschlossen ist. Auf diese Weise bleibt der Endstufen-npn-Transistor bis herab zur kleinsten Versorgungsspannung ansteuerbar.

Ein Ausführungsbeispiel der Erfindung ist in der Zeichnung dargestellt und in der nachfolgenden Beschreibung näher erläutert. Es zeigt

Fig. 1 eine schaltungsmäßige Ausgestaltung des Ausführungsbeispiels und

Fig. 2 ein Signaldiagramm zur Erläuterung der Wandlertakterzeugung.

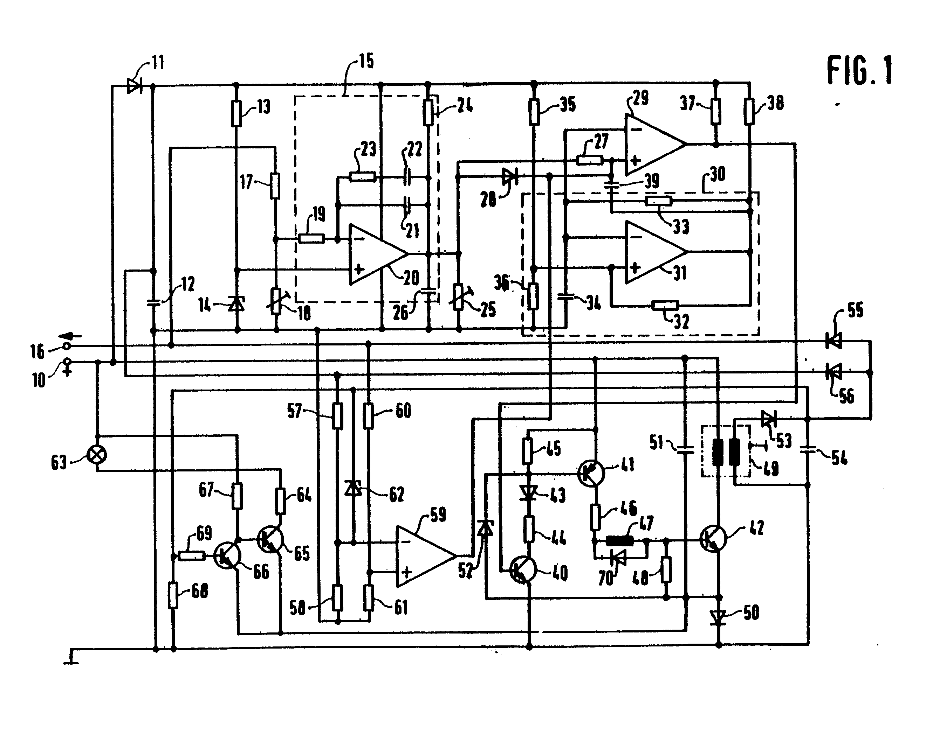

In dem in Fig. 1 dargestellten Ausführungsbeispiel ist eine mit dem positiven Pol der Versorgungsspannung verbundene Klemme 10 über die Reihenschaltung einer Diode 11 mit einem Kondensator 12 an Masse gelegt. Parallel zum Kondensator 12 liegt die Reihenschaltung eines Widerstands 13 mit einer Z-Diode 14. Die an der Z-Diode 14 liegende Spannung ist als Sollspannung einem PI-Regler 15 zugeführt. Die an einer Klemme 16 liegende Ausgangsspannung des Spannungswandlers ist über einen, aus zwei Widerständen 17, 18 bestehenden Spannungsteiler mit Masse verbunden. Der Abgriff zwischen den beiden Widerständen 17, 18 ist über einen weiteren Widerstand 19 dem Istspannungseingang des PI-Reglers 15 zugeführt. Dabei ist der Widerstand 18 als variabler Widerstand ausgebildet, um die gewünschte Ausgangsspannung des Spannungsreglers einstellen zu können. Der PI-Regler 15 besteht aus einer an sich bekannten Schaltung aus einem Komparator 20, der eine Gegenkopplung aus zwei parallel geschalteten Zweigen aufweist, wobei in dem ersten Zweig ein Kondensator 21 und in dem zweiten Zweig die Reihenschaltung eines Kondensators 22 mit einem Widerstand 23 geschaltet ist. Als Arbeitswiderstand verwendet der PI-Regler 15 einen Widerstand 24 und als Integrationselement einen Kondensator 26.

Die Ausgangsspannung des Komparators 20 ist mit dem Abgriff eines aus zwei Widerständen 24, 25 bestehenden Spannungsteilers gelegt, der parallel zum Kondensator 12 geschaltet ist. Parallel zum als variablen Widerstand ausgebildeten Widerstand 25 ist ein Kondensator 26 zur Speicherung der Ausgangsspannung des Komparators 20 geschaltet. Die am Kondensator 26 anliegende Spannung ist über die Parallelschaltung eines Widerstandes 27 mit einer Diode 28 dem nicht invertierenden Eingang eines Komparators 29 zugeführt. An den invertierenden Eingang dieses Komparators 29 ist die Ausgangsspannung eines Dreieckspannungsgenerators 30 gelegt. Dieser Dreieckspannungsgenerator besteht in an sich bekannter Weise aus einem Komparator 31, der über einen Widerstand 32 mitgekoppelt und über einen Widerstand 33 gegengekoppelt ist. Der invertierende Eingang des Komparators 31, der gleichzeitig den Ausgang des Dreieckspannungsgenerators darstellt, ist über einen Kondensator 34 an Masse gelegt. An den nicht invertierenden Eingang des Komparators 31 ist die Abgriffspannung eines aus zwei Widerständen 35, 36 bestehenden Spannungsteilers gelegt, der parallel zum Kondensator 12 geschaltet ist. Die am Kondensator 12 anliegende Spannung ist weiterhin über einen Widerstand 37 mit dem Ausgang des Komparators 29 und über einen Widerstand 38 mit dem Ausgang des Komparators 31 verbunden. Schließlich ist der Ausgangs dieses Komparators 31 über einen Kondensator 39 mit dem nicht invertierenden Eingang des Komparators 29 verbunden.

Der Ausgang des Komparators 29 ist mit der Basis eines ersten npn-Transistors 40 verbunden, der zusammen mit einem pnp-Transistor 41 sowie einem zweiten npn-Transistor 42 eine dreistufige Transistoranordnung darstellt. Dabei ist die Basis des Transistors 41 über die Reihenschaltung einer Diode 43 mit einem Widerstand 44 und der Kollektor-Emitter-Strecke des Transistors 40 mit Masse verbunden. Der mit der Klemme 10 verbundene Emitter des Transistors 41 ist über einen Widerstand 45 mit seiner Basis verbunden. Der Kollektor des Transistors 41 ist über die Reihenschaltung eines Widerstands 46 mit einer Induktivität 47 an die Basis des als Endstufentransistor geschalteten Transistors 42 angeschlossen. Zwischen die Basis und den Emitter des Transistors 42 ist ein Widerstand 48 geschaltet. Die Reihenschaltung der Primärwicklung eines Wandlertransformators 49 mit der Kollektor-Emitter-Strecke des Transistors 42 sowie einer Verpolschutzdiode 50 ist zwischen die Klemme 10 und Masse geschaltet. Zum Schutz gegen Überspannungen und als Kompensation für Leitungsinduktivitäten ist zwischen dem Emitter des Transistors 42 und die Klemme 10 ein Kondensator 51 geschaltet. Durch die beschriebene Anordnung kann als Verpolschutzdiode 50 eine Einpreßdiode verwendet werden, die ohne Isolationsmaßnahmen kathodenseitig und damit mit dem Kühlblech an Massepotential liegen darf. Solche Einpreßdioden sind zum einen einfach anzubringen und sind als Dioden für hohe Ströme als Massenprodukte billig erhältlich. Zwischen die Basis des Transistors 41 und den Emitter des Transistors 42 ist eine Z-Diode 52 geschaltet.

Parallel zur Sekundärwicklung des Wandlertransformators 49 ist die Reihenschaltung einer Diode 53 mit einem Kondensator 54 geschaltet. Der der Diode abgewandte Anschluß des Kondensators 54 ist an Masse gelegt. Die Kondensatorspannung des Kondensators 54 ist einmal über eine Diode 55 mit der Ausgangsklemme 16 verbunden und zum anderen über eine Diode 56 mit der Kathode der Diode 11. Auf diese Weise wird die Spannung am Kondensators 12 und damit die Versorgungsspannung für die Bauteile 13 bis 39 durch die höhere der beiden Spannungen an den Klemmen 10 und 16 bestimmt. Dies dient zur zusätzlichen Sicherheit des Gesamtsystems.

Parallel zum Kondensator 12 ist ein aus zwei Widerständen 57, 58 bestehender Spannungsteiler geschaltet, dessen Abgriff dem invertierenden Eingang eines Komparators 59 zugeführt ist. Ein weiterer, aus zwei Widerständen 60, 61 bestehender Spannungsteiler ist zwischen die Klemme 16 und Masse geschaltet. Der Abgriff dieses Spannungsteilers ist an den nicht invertierenden Eingang des Komparators 59 angeschlossen, dessen Ausgang mit dem nicht invertierenden Eingang des Komparators 29 verbunden ist. Eine Z-Diode 62 ist zwischen die Kathode der Diode 53 und den invertierenden Eingang des Komparators 59 geschaltet.

Eine als Kontrollampe 63 ausgebildete Kontrolleinrichtung zur Kontrolle der ordnungsgemäßen Funktion des Spannungswandlers, ein Widerstand 64, die Kollektor-Emitter-Strecke eines Transistors 65 sowie die Verpolschutzdiode 50 bilden eine zwischen die Klemme 10 und Masse geschaltete Reihenschaltung. Parallel zur Basis-Emitter-Strecke des Transistors 65 ist die Kollektor-Emitter-Strecke eines Transistors 66 geschaltet, dessen Kollektor über einen Widerstand 67 an die Klemme 10 angeschlossen ist. Parallel zum Kondensator 54 ist ein Widerstand 68 geschaltet, dessen Spannungsabfall über einen Widerstand 69 der Basis des Transistors 66 zugeführt ist.

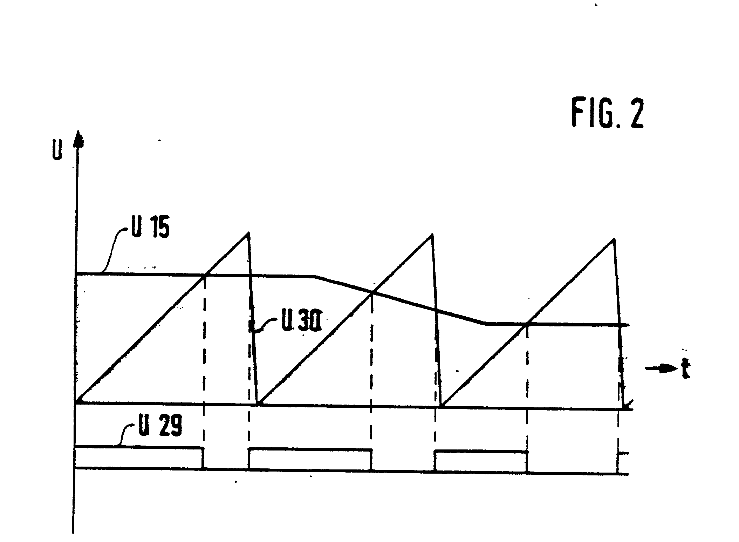

Die Wirkungsweise des in Fig. 1 dargestellten Ausführungsbeispiels soll im folgenden unter Zuhilfenahme des in Fig. 2 dargestellten Signaldiagramms erläutert werden. Der PI-Regler 15 erzeugt ein Ausgangssignal in Abhängigkeit der Differenz zwischen der an der Z-Diode 14 anliegenden Sollspannung und der am veränderbaren Widerstand 18 anliegenden geteilten Istspannung, also geteilten Ausgangsspannung des Spannungswandlers. Der Kondensator 26 gibt am nicht invertierenden Eingang des Komparators 29 die Vergleichsspannung vor. Durch Verändern des Widerstandes 25 kann dabei die Ausgangsspannung des PI-Reglers auf das Teilerverhältnis der Widerstände 24, 25 begrenzt werden. Diese Spannungsbegrenzung wirkt sich als Begrenzung der maximalen Impulsdauer der Ausgangssignalfolge des Komparators 29 aus und dient somit zum Schutz des als Endstufentransistors geschalteten Transistors 42. Es wird dadurch verhindert, daß beim Einschalten und bei überhöhtem Ausgangsstrom die Impulsdauer der Ausgangsimpulsfolge des Komparators 29 zu lang wird.

Der Komparator 29 vergleicht die Spannung U15 mit der Dreieckspannung U30 des Dreieckspannungsgenerators 30. Ein Ausgangssignal U29 wird dann nur erzeugt, wenn die Dreiecksspannung U30 unter der Spannung U15 liegt.

Steigt die Versorgungsspannung an der Klemme 10 über die gewünschte Ausgangsspannung hinaus an, so geht die Spannung U15 auf den Wert Null. Die Folge wäre, daß infolge der ausbleibenden Signale U29 der Transistor 42 nicht mehr angesteuert würde, so daß der Spannungswandler abgeschaltet würde. Insbesondere bei Sicherheitseinrichtungen ist es jedoch erforderlich, die Ausgangsspannung des Spannungswandlers ständig zu überprüfen und bei Ausfall ein Warnsignal zu erzeugen. Dies erfolgt, wie weiter unten noch näher erläutert wird, durch die Bauteile 63 bis 69. Eine Überprüfung der Ausgangsspannung (Klemme 10) kann jedoch nicht unterscheiden, ob die Ausgangsspannung infolge eines Defekts oder infolge des Ansteigens der Versorgungsspannung über die Ausgangsspannung zusammenbricht. Die Überprüfung erfolgt hier durch die Bauteile 63 bis 69. Dabei wird über den Kondensator 39 ein ständiger Notbetrieb des Spannungswandlers aufrechterhalten, der gewährleistet, daß bei Ansteigen der Versorgungsspannung über die Ausgangsspannung des Spannungswandlers diese nicht zusammenbricht. Durch jeweils eine Flanke der Rechteck-Signalfolge am Ausgang des Komparators 31 wird über diesen Kondensator 39 ein kurzer Impuls auf den nicht invertierenden Eingang des Komparators 29 gegeben. Während dieses kurzen Impulses erfolgt ein kurzer Stromstoß durch die Primärwicklung des Wandlertransformators 49, der einen Spannungsabbau der Kondensatorspannung 54 verhindert. Die Diode 28 dient dabei zur Umladung am Kondensator 39.

Die Signalfolge U29 wird über die drei Transistoren 40 bis 42 verstärkt, wodurch entsprechende Stromflußzeiten in der Primärwicklung des Wandlertransformators 49 erzeugt werden. Dieser nimmt entsprechende magnetische Energie auf und gibt sie bis zum nächsten Signal über die Diode 53 dem Kondensator 54 ab, wodurch dessen Spannung erhöht wird. Diese Spannung wird wiederum über den beschriebenen Regelkreis geregelt. Die dreistufige Transistoranordnung 40 bis 42 ist durch die npn-pnp-npn-Reihenfolge so ausgebildet, daß der Spannungswandler noch bis zu sehr geringen Versorgungsspannungen hin arbeitet. Dies wird vor allem dadurch gewährleistet, daß der Emitter des Transistors 41 direkt an die Versorgungsspannung angeschlossen ist. Der dynamische Spannungsabfall am Eingangstransistor 40 kann ebenfalls zur Ansteuerung verwendet werden. Das der Steuerstrom des Transistors 42 über die Reihenschaltung des Widerstands 46 mit der Induktivität 47 geleitet wird, kann der Widerstand 46 sehr niederohmig ausgelegt werden (z. B. 1,5 Ohm), da bei hohen Versorgungsspannungen und entsprechend kurzen Steuersignalen der Basisstrom durch die Induktivität 47 begrenzt wird, während bei niedrigen Batteriespannungen und entsprechend langen Steuersignalen der Einfluß dieser Induktivität 47 vernachlässigbar ist. Eine zur Induktivität 47 parallel geschaltete Diode 70 dient dabei als Freilaufdiode. Die Diode 43 dient zur Sperrung negativer Störimpulse, während die Z-Diode 52 positive Störmipulse, die oberhalb der Z-Spannung liegen, ausschließt.

Die Schaltungsanordnung der Bauteile 57 bis 61 hat zwei Aufgaben: Die Unterdrückung der Wandlerfunktion während der Anlaufphase und den Schutz bei Kurzschluß des Ausgangs. Verglichen wird durch die beiden Spannungsteiler 57, 58 bzw. 60, 61 die effektive Versorgungsspannung am Kondensator 12 mit der Ausgangsspannung des Spannungswandlers an der Klemme 16. Sowohl während der Anlaufphase, wie auch bei einem Kurzschluß liegt an der Klemme 16 ein geringerer Spannungswert an, wodurch der Komparator 59 ausgangsseitig auf Null-Potential geht. Dieses Null-Potential zieht den nicht invertierenden Eingang des Komparators 29 ebenfalls auf ein Null-Potential, wodurch die Signalfolge U29 unterdrückt wird. Diese Unterdrückung während der Anlaufphase dient zum einen zum Schutz des Spannungswandlers bei großer Last und ermöglicht im Falle der Versorgung einer kapazitiven Energiereserve durch den Spannungswandler, z. B. in einer Sicherheitseinrichtung gemäß der DE-PS 2 232 179, die Überprüfung dieser Energiereserve auf richtige Funktion nach dem Einschalten dieser Sicherheitseinrichtung. Der Spannungswandler übt somit keinen Einfluß auf diese Überprüfung aus und realisiert nach einer Unterdrückung der Wandlerfunktion durch die Aufladung von Kondensator 26 einen »soft start«. Durch die Z-Diode 62 wird auf einfache Weise die Ausgangsspannung des Spannungswandlers, also die Spannung am Kondensator 54 begrenzt. Steigt die Spannung über den Grenzwert an, so bricht die Z-Diode 62 durch und zieht entsprechend den obigen Ausführungen den nicht invertierenden Eingang des Komparators 29 auf Null-Potential.

Die Überwachung der Wandlerfunktion wird durch die Bauteile 63 bis 69 erreicht.

Ist die Spannung am Kondensator 54 oberhalb einer minimal zulässigen Spannung, so ist der Transistor 66 stromleitend und entsprechend der Transistor 65 gesperrt. Die Kontrollampe 63 leuchtet nicht. Sinkt die Ausgangsspannung unter diesen Minimalwert, so steuern beide Transistoren 65, 66 um, und die Kontrollampe 63 leuchtet auf, wodurch ein Fehler angezeigt wird.

Die vier Komparatoren können vorzugsweise durch einen als integrierten Schaltkreis erhältlichen 4-fach-Komparator realisiert werden.

### Patentansprüche

1. Spannungswandler mit einem Wandlertransformator (49) und einem Spannungsregler (15), dem eine Sollspannung sowie die Ausgangsspannung des Wandlertransformators (49) als Istspannung zuführbar ist, wobei an den Wandlertransformator (49) eine getaktete Spannung angelegt ist, die in Abhängigkeit der Ausgangsspannung des Spannungsreglers (15) steht, und wobei zur Erzeugung der getakteten Spannung ein erster Komparator (29) mit einem nicht invertierten und einem invertierten Eingang vorgesehen ist, an dessen einen Eingang die Ausgangsspannung des Spannungsreglers (15) und an dessen anderen Eingang die Ausgangsspannung eines Dreieckspannungsgenerators (30) angelegt ist, dadurch gekennzeichnet, daß ein zweiter Komparator (59) zum Vergleich der Ausgangsspannung des Spannungswandlers mit der Versorgungsspannung vorgesehen ist und daß bei Absinken der Ausgangsspannung des Spannungswandlers unter einen einstellbaren Teil der Versorgungsspannung durch den zweiten Komparator (59) die an einem Eingang des ersten Komparators (29) liegende Ausgangsspannung des Spannungsreglers (15) absenkbar ist.

2. Spannungswandler nach Anspruch 1, dadurch gekennzeichnet, daß zur Begrenzung der Ausgangsspannung des Wandlertransformators (49) diese über eine Z-Diode (62) dem invertierenden Eingang des zweiten Komparators (59) zugeführt ist.

3. Spannungswandler nach Anspruch 1 oder 2, dadurch gekennzeichnet, daß der Spannungsregler (15) als PI-Regler ausgebildet ist.

4. Spannungswandler nach einem der vorhergehenden Ansprüche, dadurch gekennzeichnet, daß zur Begrenzung der Ausgangsspannung des Spannungsreglers (15) dieser als »open collector« IC ausgebildet ist und an den Ausgang des IC ein Spannungsteiler (24, 25) für die Versorgungsspannung vorgesehen ist, dessen Abgriff mit dem Ausgang des Spannungsreglers (15) verbunden ist und daß ein Speicherkondensator (26) für die Ausgangsspannung des Spannungsreglers (15) vorgesehen ist.

5. Spannungswandler nach einem der vorhergehenden Ansprüche, dadurch gekennzeichnet, daß jeweils ein durch eine Flanke des die Dreiecksspannung erzeugende Dreiecksspannungsgenerators (30) erzeugter Impuls dem Komparatoreingang zuführbar ist, an dem die Ausgangsspannung des Spannungsreglers (15) angelegt ist.

6. Spannungswandler nach einem der vorhergehenden Ansprüche, dadurch gekennzeichnet, daß zur Spannungsversorgung der Regelelektronik (13 bis 39) über Dioden (56, 11) sowohl die Versorgungsspannung wie auch die gleichgerichtete Ausgangsspannung des Wandlertransformators (49) zugeführt sind.

7. Spannungswandler nach einem der vorhergehenden Ansprüche, dadurch gekennzeichnet, daß die Ausgangssignalfolge des ersten Komparators (29) dem Wandlertransformator (49) über eine dreistufige Transistoranordnung (40 bis 42) zugeführt wird, die aus einem npn-, einem pnp- und einem npn-Transistor besteht, wobei der Emitter des pnp-Transistors (41) direkt an die Versorgungsspannung angeschlossen ist.

8. Spannungswandler nach Anspruch 7, dadurch gekennzeichnet, daß in den Basisstromkreis des dritten, im Primärstromkreis des Wandlertransformators (49) liegenden Transistors (42) eine Induktivität (47) geschaltet ist.

9. Spannungswandler nach Anspruch 7 oder 8, dadurch gekennzeichnet, daß die Schaltstrecke des im Primärstromkreis liegenden Transistors (42) über eine Verpolschutzdiode (50) an Masse gelegt ist.

10. Spannungswandler nach einem der vorhergehenden Ansprüche, dadurch gekennzeichnet, daß die gleichgerichtete Ausgangsspannung des Wandlertransformators (49) einer Schwellwertstufe (64 bis 69) zugeführt ist, durch die eine Kontrolleinrichtung (63) steuerbar ist.

## Claims

1. Voltage converter comprising a converter transformer (49) and a voltage controller (15) which can be supplied with a nominal voltage and with the output voltage of the converter transformer (49) as actual voltage, the converter transformer (49) having applied to it a clocked voltage which is dependent on the output voltage of the voltage controller (15) and, for generating the clocked voltage, a first comparator (29) having a non-inverted and an inverted input being provided, to the one input of which the output voltage of the voltage controlle (15) is applied and to the other input of which the output voltage of a triangular voltage generator (30) is applied, characterised in that a second comparator (59) for comparing the output voltage of the voltage converter with the supply voltage is provided and that, when the outout voltage of the voltage converter drops below an adjustable proportion of the supply voltage, the output voltage, present at one input of the first comparator (29), of the voltage controller (15) can be lowered by the second comparator (59).

2. Voltage converter according to claim 1, characterised in that, for limiting the output voltage of the converter transformer (49), this voltage is fed via a Zener diode (62) to the inverting input of the second comparator (59).

3. Voltage converter according to claim 1 or 2, characterised in that the voltage regulator (15) is constructed as a PI controller.

4. Voltage converter according to one of the preceding claims, characterised in that, for limiting the output voltage controller (15), the latter is constructed as open-collector IC and at the output of the IC a voltage divider (24, 25) for the supply voltage is provided, the tap of which divider is connected to the output of the voltage controller (15), and that a storage capacitor (26) is provided for the output voltage of the voltage controller.

5. Voltage converter according to one of the preceding claims, characterised in taht in each case a pulse generated by one edge of the triangular voltage generator (30) generating the triangular voltage can be fed to the comparator input to which the output coltage of the voltage controller (15) is applied.

6. Voltage converter according to one of the preceding claims, characterised in that, for supplying voltage to the control electronics (13 to 39), both the supply voltage and the rectified output voltage of the converter transformer (49) are supplied via diodes (56, 11).

7. Voltage converter according to one of the preceding claims, characterised in that the output signal sequence of the first comparator (29) is fed to the converter transformer (49) via a three-stage transistor arrangement (40 to 42) consisting of an npn, a pnp and an npn transistor, the emitter of the pnp transistor (41) being directly connected to the supply voltage.

8. Voltage converter according to claim 7, characterised in that an inductance (47) is connected in the base circuit of the third transistor (42) located in the primary circuit of the converter transformer (49).

9. Voltage converter according to claim 7 or 8, characterised in that the switching path of the transistor (42) located in the primary circuit is connected to earth via a reverse supply protection diode (50).

10. Voltage converter according to one of the preceding claims, characterised in that the rectified output voltage of the converter transformer (49) is fed to a threshold stage (64 to 69) by means of which a monitoring device (63) can be controlled.

## Revendications

1. Convertisseur de tension comportant un transducteur (49) et un régulateur de tension (15) auquel on peut amener une tension prescrite ainsi que, comme tension réelle, la tension de sortie du transducteur (49), étant précisé que l'on amène au transducteur (49) une tension rythmée, fonction de la tension de sortie du régulateur de tension (15) , et étant précisé que pour produire la tension rythmée, il est prévu un premier comparateur (29) avec une entrée de non-inversion de signe et une entrée d'inversion de signe, à la première entrée duquel on amène la tension de sortie du régulateur de tension (15) et à l'autre entrée duquel on amène la tension de sortie d'un générateur de tension à signal triangulaire (30), caractérisé en ce qu'il est prévu un deuxième comparateur (59) pour comparer la tension de sortie du convertisseur de tension à la tension d'alimentation et en ce que, dans la cas où la valeur de la tension de sortie du convertisseur de tension devient inférieure à une proportion, réglable, de la tension d'alimentation, on peut, au moyen du deuxième comparateur (59), abaisser la tension de sortie du régulateur de tension (15) qui vient à une entrée du premier comparateur (29).

2. Convertisseur de tension selon la revendication 1, caractérisé en ce que pour limiter la tension de sortie du transducteur (49), cette tension est amenée, par l'intermédiaire d'une diode Z (62), à l'entrée d'inversion de signe du deuxième comparateur (59).

3. Convertisseur de tension selon la revendication 1 ou la revendication 2, caractérisé en ce que le régulateur de tension (15) est conçu sous forme de régulateur PI (proportionnel intégral).

4. Convertisseur de tension selon l'une des revendications précédentes, caractérisé en ce que pour limiter la tension de sortie du régulateur de tension (15), celui-ci est conçu sous forme de circuit intégré à collecteur ouvert (»open collector« IC) et il est prévu à la sortie du circuit intégré, un diviseur de tension (24, 25) pour la tension d'alimentation, dont le point de prélèvement est relié à la sortie du régulateur de tension (15); et en ce qu'il est prévu un condensateur de mémorisation (26) pour la tension de sortie du régulateur de tension (15).

5. Convertisseur de tension selon l'une des revendications précédentes, caractérisé en ce que l'on peut amener à l'entrée du comparateur où se trouve la tension de sortie du régulateur de tension (15), chaque fois, une impulsion produite par un flanc du générateur de tension à signal triangulaire (30) qui produit la tension à signal triangulaire.

6. Convertisseur de tension selon l'une des revendications précédentes, caractérisé en ce que l'on amène à l'alimentation en tension de l'électronique de régulation (13 à 39), par l'intermédiaire de diodes (56, 11), aussi bien la tension d'alimentation que la tension de sortie redressée du transducteur (49).

7. Convertisseur de tension selon l'une des revendications précédentes, caractérisé en ce que l'on amène la suite des signaux de sortie du premier comparateur (29) au transducteur (49) par l'intermédiaire d'un dispositif à transistors à trois étages (40 à 42), constitué d'un transistor npn, d'un transistor pnp et d'un transistor npn, étant précisé que l'émetteur du transistor pnp (41) est directement relié à la tension d'alimentation.

8. Convertisseur de tension selon la revendication 7, caractérisé en ce que dans le circuit de la base de troisième transistor (42) qui se trouve dans le circuit primaire du transducteur (49) est montée une inductance (47).

9. Convertisseur de tension selon la revendication 7 ou la revendication 8, caractérisé en ce que la chaîne collecteur-émetteur du transistor (42) qui se trouve dans le circuit primaire est mis à la masse par l'intermédiaire d'une diode de protection à l'égard d'une inversion de pôle (50).

10. Convertisseur de tension selon l'une des revendications précédentes, caractérisé en ce que la tension de sortie redressée du transducteur (49) est amenée à un étage à valeur de seuil (64 à 69) qui permet de commander un dispositif de contrôle (63).

FIG. 1

FIG. 2